**Europäisches Patentamt**

**European Patent Office**

**Office européen des brevets**

(19)

(11) Veröffentlichungsnummer: **0 052 306 B1**

(12) **EUROPÄISCHE PATENTSCHRIFT**

(45) Veröffentlichungstag der Patentschrift: 03.06.87

(21) Anmeldenummer: **81109496.0**

(22) Anmeldetag: **04.11.81**

(51) Int. Cl.⁴: **G 06 K 7/10,** H 04 L 1/08, G 08 B 3/10

(54) Vorrichtung zum Erfassen, Übertragen und Verarbeiten von in Code, vorzugsweise in Strichcode, vorliegenden Daten.

(30) Priorität: **19.11.80 DE 3043557**

(43) Veröffentlichungstag der Anmeldung: **26.05.82 Patentblatt 82/21**

(45) Bekanntmachung des Hinweises auf die Patenterteilung: **03.06.87 Patentblatt 87/23**

(84) Benannte Vertragsstaaten: **AT BE CH DE FR GB IT LI LU NL SE**

(56) Entgegenhaltungen:
DE - A - 2 033 796
DE - A - 2 845 767
FR - A - 2 151 914
FR - A - 2 159 015
GB - A - 1 447 099
US - A - 3 826 900
US - A - 4 088 981
US - A - 4 158 194

(73) Patentinhaber: **Pharmazent Industriebeteiligungs- und Datenverarbeitungs-Aktiengesellschaft, Michelbeuerngasse 9a, A-1091 Wien (AT)**

(72) Erfinder: **Bernot, Hartmut, Schmeilweg 3, 6900 Heidelberg (DE)**
Erfinder: **Tremmel, Hartmut, In der Kappisau 4, 6921 Sinsheim (DE)**

(74) Vertreter: **Ratzel, Gerhard, Dr., Seckenheimer Strasse 36a, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine Vorrichtung zum Erfassen, Übertragen und Verarbeiten von in optisch lesbaren Codes vorliegenden Daten bestehend aus einem batterieversorgten Lesestift mit einer Lese-, Speicher-, Verarbeitungs- sowie Sender- und Empfangseinheit zum optischen Lesen von Codes und zur Abstrahlung der verarbeiteten Daten sowie zum Empfang einer Rückantwort in Form von elektromagnetischen Wellen und aus wenigstens einer, räumlich vom Lesestift getrennt angeordneten stationären Sender- und Empfangsanlage, an die weitere Datenverarbeitungsgeräte angeschlossen sind.

Heute gehen immer mehr Hersteller dazu über, ihre Artikel im Food- wie Non-Food-Bereich mit einem maschinenlesbaren Code zu versehen, der beispielsweise eine Strichcode gemäss der Europäischen Artikel Nr. (EAN) ist. In diesem Falle können codierte Informationen an Packungen über Lesepistolen oder Leseeinrichtungen erfasst werden und in Datenspeicher zur Weiterverarbeitung gegeben werden. Dadurch ist eine schnelle und kostengünstige und vor allen Dingen umfassende Kontrolle des Wareneingangs und Warenausgangs möglich.

Dabei ist es bekannt, dass derartige Lesestifte oder Lesepistolen über Kabel mit der Erfassungsanlage verbunden sind. Dadurch ist die Leseeinheit ortsgebunden oder es muss ein unhandlich langes Kabel verwendet werden. Desweiteren ist es auch bekannt, Lesestifte mit Speichern und einem Sender zur Abstrahlung von elektromagnetischen Wellen zu versehen, wobei die Information gespeichert wird und dann von Zeit zu Zeit an eine feste Empfängerstation über die drahtlose Übertragungsstrecke gesendet wird. Hierbei ist jedoch ein mobiler Einsatz eines derartigen Lesestiftes oder einer derartigen Lesepistole nur schwer im On-Line-Betrieb möglich, weil sonst die Fehlerquote sehr hoch ist. Die benützten Übertragungsstrecken, insbesondere Infrarotstrecken, sind durch Umwelteinflüsse sehr störanfällig.

Zum Stand der Technik ist die GB-PS 1 447 099 zu nennen. Nach dieser britischen Patentschrift werden die vom Lesestift an die stationäre Empfängerstation übermittelten Daten dort auf ihre Richtigkeit geprüft. Wird ihre Richtigkeit festgestellt, so gibt die stationäre Empfängerstation an den Lesestift ein Bestätigungssignal ab, worauf der Lesestift zur weiteren Datenübertragung bereit gemacht wird.

Wird ein solches Bestätigungssignal dem Lesestift nicht zurückgegeben bzw. ein anders geartetes Signal dem Lesestift übergeben, so wird der Benutzer des Lesestiftes aufgefordert dieselben Daten nochmals zu lesen und zu übertragen. Dies bedeutet aber noch nicht einen Datentransfer in beiden Richtungen zwischen Lesestift und Datenverarbeitungsanlage, also eine Zurückgabe der von dem Lesestift an die Datenverarbeitungsanlage gegebenen Daten. Noch weniger bedeutet dies, dass eine Abweichung zwischen der Rückmeldung und der ursprünglich gesendeten Information zur Bedingung dafür gemacht wird, dass eine automatische Wiederabfrage der gleichen Daten erfolgen soll.

Aus der FR-A-2 151 914 ist ein handgeführter Abtaster zum Abtasten einer magnetischen Codierung bekannt. Die abgetasteten Daten werden nach Zwischenspeicherung im Abtaster mittels elektromagnetischer Wellen auf eine zentrale Station übertragen. Der Zwischenspeicher im Abtaster wird nach Empfang und Überprüfung der Daten durch die zentrale Station durch ein von dieser abgegebenes Signal gelöscht. Es wird empfohlen den Code auf den Codeträger dreimal hintereinander anzuordnen, wodurch beim Empfänger eine Fehlererkennung möglich ist.

Der Erfindung liegt deshalb die Aufgabe zugrunde, eine Vorrichtung der eingangs genannten Gattung zu schaffen, bei der eine Rückmeldung praktisch eine fehlerfreie Übertragung der Information ohne zusätzliche Redunanz möglich ist, wobei die Mobilität des Lesestiftes voll erhalten ist.

Die Lösung dieser Aufgabe besteht darin, dass der Lesestift einen Codierer bzw. Decodierer aufweist und dem Lesestift eine Vielzahl von an sich bekannten, räumlich voneinander getrennten stationären Empfänger-Sendereinheiten zugeordnet sind, die untereinander parallel geschaltet sind, dass der Datentransfer in beiden Richtungen zwischen Lesestift und stationären Empfänger-Sender-Einheiten erfolgt, wobei die stationären Empfänger-Sender-Einheiten bei Empfang der Daten vom Lesestift Daten an diesen zurücksenden, der Stift diese auf Abweichungen überprüft und bei Abweichungen die Datenübertragung automatisch so lange wiederholt, bis die rückgesendeten Daten keine Abweichung mehr aufweisen.

Eine bevorzugte Ausführungsform ist dadurch gekennzeichnet, dass die drahtlosen Übertragungswege als Infrarotstrecken ausgeführt sind.

Die Erfindung besitzt gegenüber dem Stand der Technik den hervorstechenden Vorteil, dass bei ihr eine sofortige Übertragung der gelesenen Informationen zur Datenverarbeitungsanlage erfolgt und deshalb die Daten in derselben sofort zur Weiterverarbeitung zur Verfügung stehen. Daneben ist eine sofortige Rückmeldung von der Datenverarbeitungsanlage hin zum Lesestift möglich, um die Richtigkeit der Anzeige zu verifizieren. Dabei ist es möglich, die Rückmeldung optisch oder akustisch anzuzeigen. Desweiteren sind in vorteilhafter Weise die Übertragungswege als Infrarotstrecken ausgeführt. Bei hinreichend dichter Installation der stationären Empfänger-Sendereinheiten ist dadurch eine ortsunabhängige Funktion des Lesestiftes gewährleistet.

Durch die Möglichkeit der Informationsübertragung sowohl vom Lesestift zu den stationären Empfänger-Sendereinheiten, als auch in der umgekehrten Richtung, können Übertragungsfehler der Infrarotstrecke und des Kabelnetzes sofort erkannt und durch eine automatische Wiederholung der Übertragung behoben werden. Dadurch kann die Fehlerrate auf ein vernachlässigbar kleines Mass gesenkt werden, was eine hohe Sicherheit und geringe Störanfälligkeit der erfindungsgemässen Vorrichtung bedeutet.

Desweiteren ist es möglich, mit einer Vielzahl von Lesestiften parallel zu arbeiten, wobei diese entweder mit verschiedenen Frequenzen arbeiten oder beispielsweise mittels des Zeitscheibenverfahrens koordiniert sind.

Mittels der erfindungsgemässen Vorrichtung ist somit jederzeit eine vollständige und lückenlose Erfassung jeglicher Verkaufs- und Lagerbewegung möglich. Insbesondere eignet sich die Erfindung auch beim Einsatz in Apotheken.

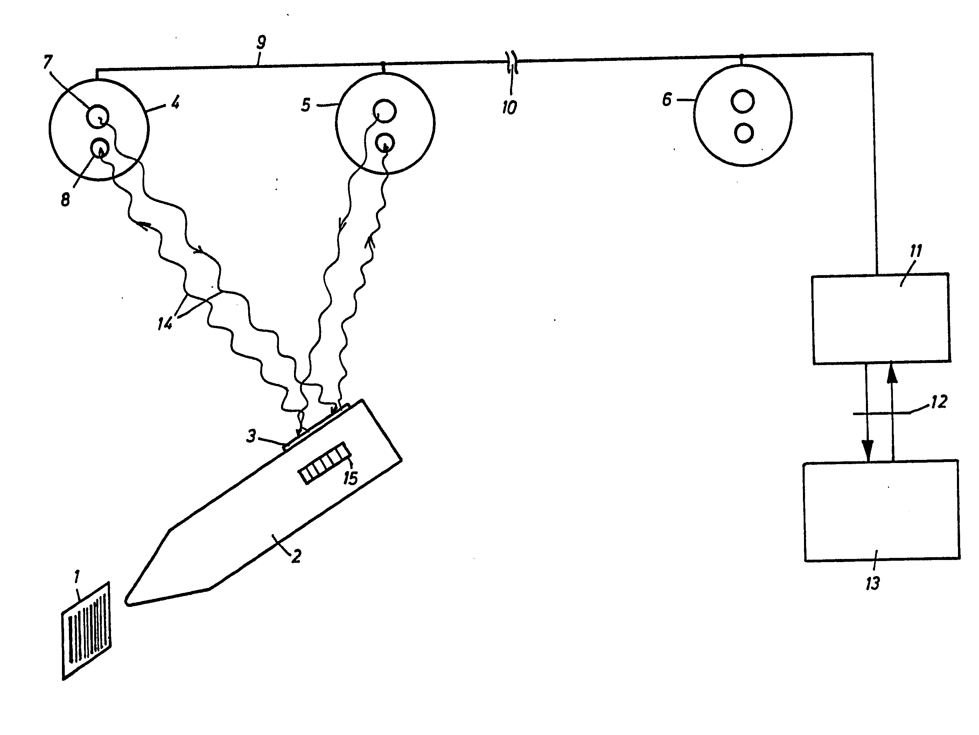

Ein Beispiel der Erfindung ist in der Zeichnung dargestellt und anschliessend beschrieben. Dabei zeigt die Figur eine prinzipielle Darstellung eines mobilen Lesestiftes mit einer Vielzahl von stationären Empfänger-Sendereinheiten, die parallel an eine Datenverarbeitungs- und Speicheranlage angeschlossen sind.

Ein Lesestift 2 erfasst über eine Lichtdiode beispielsweise einen Strichcode 1, der sich auf einer Warenpackung befindet. Der Lesestift 2 besteht aus einem länglichen Körper, der ergometrisch in der Hand der Bedienungsperson liegt. Prinzipiell beinhaltet der Lesestift eine Sender- und Empfängereinheit, einen Codierer/Decodierer und Speicherglieder. Die gelesene Information wird innerhalb des Codierers/Decodierers codiert und über den Sender 3 in Form von elektromagnetischen Wellen abgestrahlt. Dabei wird vorzugsweise im Infrarotbereich gearbeitet. Der Lesestift 2 besitzt eine Empfänger-Sendereinheit, über die Daten gesendet und empfangen werden können.

Dem Lesestift 2 zugeordnet sind eine Reihe von stationären Empfänger-Sendereinheiten 4, 5, 6, die miteinander über eine Leitung 9 parallel verbunden sind, die zu einer Steuereinheit 11 führt.

Die Steuereinheit 11 ist über eine Standardschnittstelle z.B. V24, ASC II-Code, mit einer Datenverarbeitungsanlage 13 und/oder Speichereinrichtung verbunden.

Es ist nun möglich, nach Empfang von Daten vom Lesestift sofort über die stationären Empfänger-Sendereinheiten 4, 5, 6 dem Lesestift eine Rückmeldung zu senden, die vorzugsweise ebenfalls im Infrarotbereich erfolgt. Dadurch kann die Informationsmeldung des Lesestiftes überprüft werden, wobei bei einer Abweichung der Rückmeldung von der ursprünglich gesendeten Information eine automatische Wiederabfrage der selben Daten erfolgt und die automatische Wiederabfrage der Daten solange repetiert wird, bis die rückgesendeten Daten mit den auf der Ware abzufragenden Daten übereinstimmen, wodurch Fehler in der Übertragungsstrecke weitgehend ausgemerzt und vermieden werden können. Dazu kann der Lesestift eine optische oder auch akustische Anzeige 15 mit Speichereinheit besitzen, um die von der Datenanlage 13 gesendete Information kurzfristig zu speichern und anzuzeigen.

Desweiteren ist es möglich, mehrere Lesestifte einer Vielzahl von stationären Empfänger-Sendereinheiten zuzuordnen. Diese Lesestifte können auf verschiedenen Frequenzen arbeiten oder sie werden beispielsweise im Zeitscheibenverfahren miteinander koordiniert.

In der Figur besitzt jede Empfänger-Sendereinheit 4, 5, 6 einen Sender 7 und einen Empfänger 8, was durch zwei Krise dargestellt ist. An der Leitung 9 können natürlich eine Vielzahl von stationären Empfänger-Sendereinheiten angeordnet sein, was durch die Unterbrechung 10 der Leitung 9 bezeichnet ist. Zwischen der Steuereinheit 11 und der Datenverarbeitungsanlage ist die mit der Bezugsziffer 12 benannte Standardschnittstelle angeordnet.

Desweiteren kann der Stift eine Eingabeeinrichtung zur manuellen Eingabe von Daten sowie eine Anzeigeeinrichtung besitzen.

Darüberhinaus kann die erfindungsgemässe Vorrichtung in einfacher Weise als Rufsystem verwendet werden, in dem von der Datenverarbeitungsanlage ausgehend Rufzeichen oder Rufinformationen an die einzelnen Lesestifte und deren Träger gesendet werden.

In vorteilhafter Weise kann die vorliegende Erfindung für eine Vielzahl von optisch lesbaren Codes verwendet werden, insbesondere für Strichcodes.

Liste der Bezugszeichen

| | |
|---|---|
| 1 | Strichcode auf einer Warenpackung |
| 2 | mobiler Lesestift |
| 3 | Sende-Empfangseinheit des Lesestiftes |
| 4, 5, 6 | stationäre Empfänger-Sendereinheiten |
| 7 | Sender der Empfänger-Sendereinheit |
| 8 | Empfänger der Empfänger-Sendereinheit |
| 9 | Parallelleitung |
| 10 | Unterbrechung |
| 11 | Steuereinheit |
| 12 | Standardschnittstelle |
| 13 | Datenverarbeitungsanlage |
| 14 | Infrarotwellen |
| 15 | optische oder akustische Datenanzeige |

**Patentansprüche**

1. Vorrichtung zum Erfassen, Übertragen und Verarbeiten von in optisch lesbaren Codes vorliegenden Daten, bestehend aus einem batterieversorgten Lesestift mit einer Lese-, Speicher-, Verarbeitungs- sowie Sender- und Empfangseinheit zum optischen Lesen der Codes und zur Abstrahlung der verarbeiteten Daten sowie zum Empfang einer Rückantwort in Form von elektromagnetischen Wellen und aus wenigstens einer, räumlich vom Lesestift getrennt angeordneten stationären Sender- und Empfangsanlage, an die weitere Datenverarbeitungsgeräte angeschlossen sind, dadurch gekennzeichnet, dass der Lesestift (2) einen Codierer bzw. Decodierer aufweist und dem Lesestift eine Vielzahl von an sich bekannten, räumlich voneinander getrennten, stationären Empfänger-Sendereinheiten (4, 5, 6, 11) zugeordnet sind, die untereinander parallel geschaltet sind, dass der Datentransfer in beiden Richtungen zwischen Lesestift und stationären Empfänger-Sender-Einheiten (4, 5, 6, 11) erfolgt, wobei die stationären Empfänger-Sender-Einheiten bei Empfang der Daten vom Lesestift Daten an diesen zurücksenden, der Stift diese auf Abweichungen überprüft und bei Abweichungen die Datenübertragung automatisch so lange wiederholt, bis die rückgesendeten Daten keine Abweichung mehr aufweisen.

2. Vorrichtung nach Anspruch 1, dadurch gekennzeichnet, dass die drahtlosen Übertragungswege als Infrarotstrecken ausgebildet sind.

**Claims**

A device for scanning, transmitting and processing data presented in the form of an optically readable code, comprising a battery-powered reading pen with a reading, storing, processing and transmitting and receiving unit for the optical reading of a code and for emitting the processed data and for receiving a response in the form of electromagnetic waves, and at least one stationary transmitting and receiving installation which is disposed spatially removed from the reading pen and to which further data-processing equipment is connected, characterised in that the reading pen (2) has an encoder and decoder and the reading pen has associated therewith a plurality of per se known spatially separated, stationary receiver-transmitter units (4, 5, 6 11) which are connected in parallel with one another, and in that data transfer takes place in both directions between the reading pen and the stationary receiver-transmitter units (4, 5, 6, 11), such that when the stationary receiver-transmitter units receive data from the reading pen they send back data to the latter, the pen checks this data for errors and, of errors are present, automatically repeats the data transmission until such time as the data sent back contains no errors.

2. An apparatus according to Claim 1, characterised in that the wireless transmission paths are in the form of infrared paths.

**Revendications**

1. Dispositif pour détecter, transmettre et traiter des données présentes dans un code à lecture optique, comprenant une pointe de lecture alimentée par batterie comportant une unité de lecture, de mémoire, de traitement, ainsi que d'émission et de réception, pour la lecture optique du code et pour la diffusion des données traitées, ainsi que pour recevoir une réponse sous forme d'ondes électromagnétiques, et au moins une installation d'émission et de réception fixe disposée de façon à être séparée spatialement de la pointe de lecture, à laquelle sont raccordés d'autres appareils de traitement des informations, caractérisé en ce que la pointe de lecture (2) comporte un codeur ou décodeur, en ce qu'il est rattaché à la pointe de lecture une pluralité d'unités de réception et émission fixes (4, 5, 6, 11) séparées spatialement entre elles, connues en soi, montées en parallèles entre elles, et en ce que le transfert des données a lieu dans les deux sens entre la pointe de lecture et les unités de réception et d'émission fixes (4, 5, 6, 11), les unités de réception et d'émission fixes retransmettant des données à la pointe de lecture lorsqu'elles reçoivent des données de celle-ci, la pointe les contrôlant en recherchant des anomalies et, répétant automatiquement, en présence d'anomalies, le transfert des données, jusqu'à ce que les données retransmises ne présentent plus d'anomalie.

2. Dispositif selon la revendication 1, caractérisé en ce que les voies de transmission sans fil sont réalisées sous la forme de trajets infrarouges.